# EUROPEAN PATENT SPECIFICATION

(11) **EP 4 117 365 B1**
(45) Date of publication and mention of the grant of the patent: **12.11.2025**
(21) Application number: 21774334.3
(22) Date of filing: 17.03.2021
(51) Int. Cl.: H04W 72/0446, H04L 5/14, H04L 5/00, H04W 72/0453

(54) **CARRIER CONFIGURATION METHOD, APPARATUS AND SYSTEM**
TRÄGERKONFIGURATIONSVERFAHREN, -VORRICHTUNG UND -SYSTEM
PROCÉDÉ, APPAREIL ET SYSTÈME DE CONFIGURATION DE PORTEUSES

(30) Priority: 25.03.2020 CN 202010218138
(43) Date of publication of application: 11.01.2023
(73) Proprietor: Huawei Technologies Co., Ltd., Shenzhen, Guangdong 518129, (CN)
(72) Inventor: CAO, Yongzhao, Shenzhen, Guangdong 518129 (CN); TANG, Zhenghua, Shenzhen, Guangdong 518129 (CN)
(74) Representative: Thun, Clemens
(86) International application number: PCT/CN2021/081305
(87) International publication number: WO 2021/190376

(56) References cited:
- EP-A1- 3 874 838
- WO-A1-2020/092962
- CN-A- 103 517 421
- CN-A- 108 093 487
- CN-A- 109 392 133
- CN-A- 109 803 383
- US-A1- 2015 237 626
- INTERDIGITAL INC.: "On configuration of GC-PDCCH for dynamic SFI", 3GPP DRAFT; R1-1720637 ON CONFIGURATION OF GC-PDCCH FOR DYNAMIC SFI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20171127 - 20171201, 18 November 2017 (2017-11-18), Mobile Competence Centre ; 650, route des Lucioles ; F-06921 Sophia-Antipolis Cedex ; France, XP051370101

## Description

### CROSS-REFERENCE TO RELATED APPLICATIONS

This application claims priority to Chinese Patent Application No. 202010218138.4, filed with the China National Intellectual Property Administration on March 25, 2020 and entitled "CARRIER CONFIGURATION METHOD, APPARATUS, AND SYSTEM".

### TECHNICAL FIELD

Embodiments of this application relate to the field of communication technologies, and in particular, to a carrier configuration methods, apparatuses, computer-readable storage medium and computer program product.

### BACKGROUND

In phase 1 of R15 protocol research, a new radio (New radio, NR) framework is defined, and a waveform, channel coding, a frame structure, a flexible duplex mode, and the like used for the NR are specified. Solutions such as uplink and downlink decoupling, centralized unit (centralized unit, CU)-distributed unit (distributed unit, DU) separation, and non-standalone (non-standalone, NSA)/standalone (standalone, SA) networking are specified in an architecture. Enhanced mobile broadband (enhanced mobile broadband, eMBB) scenarios are focused, and ultra-reliable and low-latency communication (ultra-reliable & low latency communication, uRLLC) service types newly added to a 5^{th} generation (5^{th} generation, 5G) communication system are clearly defined. In phase 2 of R16 protocol research, a new NR multiple access technology, an eMBB service enhancement technology below 6 GHz, a millimeter wave high-frequency backhaul technology, and the like are further researched. An NR protocol framework is further improved and enriched based on R15. In addition, more attention is paid to vertical industries. Research on URLLC services based on R15 is enhanced, service research in industry fields such as massive machine-type communication (massive machine type communication, mMTC), device-to-device (device-to-device, D2D), and the internet of vehicles, and unlicensed spectrum access is also carried out. A key requirement of the vertical industries is a latency. Currently, most 5G carriers are time division duplex (Time Division Duplexing, TDD) carriers. Due to a limitation of a slot configuration, the latency cannot meet a
requirement of 1 ms, and this restricts an application of 5G in vertical industries in the future.
The document US 2015/0237626 A1 shows an information transmission method, an according user equipment, and an according base station. Especially, this document show dynamic time division duplex resource allocation.
The document EP 3 874 838 A1 shows a system and method for indicating potential new radio uplink transmission. Also here, a dynamic allocation of time division duplex resources is shown.

### SUMMARY

The present invention is defined by the independent claims. Further advantageous developments are shown by the dependent claims.

Embodiments of this application provide a carrier configuration methods, apparatuses, computer-readable storage medium and computer program product, to resolve a latency problem caused by a slot configuration limitation on a TDD carrier.

Based on the foregoing solution, in a manner of a combination of two or more TDD carriers, namely, a combination of the at least one first-type TDD carrier and the at least one second-type TDD carrier, when uplink data transmission is performed on the second-type TDD carrier, if there is a downlink data requirement, downlink data transmission may be performed by using a downlink slot and/or symbol of the first-type TDD carrier instead of waiting for a downlink symbol of the second-type TDD carrier, thereby reducing a latency of the downlink data transmission. For another example, when downlink data transmission is performed on the first-type TDD carrier, if there is an uplink data requirement, uplink data transmission may be performed by using an uplink slot and/or symbol of the second-type TDD carrier instead of waiting for an uplink symbol of the first-type TDD carrier, thereby reducing a latency of the uplink data transmission. Therefore, this TDD carrier combination manner can achieve an effect similar to that of an FDD carrier. In this way, resources for sending uplink and downlink data are fully guaranteed, a latency can be reduced, and uplink and downlink performance can be improved. In addition, compared with an FDD frequency band, the TDD carrier combination manner may have a wider bandwidth, and this improves uplink and downlink performance and ensures user experience

### BRIEF DESCRIPTION OF DRAWINGS

FIG. 1 is a schematic diagram of a network architecture to which an embodiment of this application is applicable;
FIG. 2 is an example of a slot configuration corresponding to a TDD carrier in a conventional technology;
FIG. 3 is another example of a slot configuration corresponding to a TDD carrier in a conventional technology;
FIG. 4 is a schematic diagram of a carrier configuration method according to an embodiment of this application;
FIG. 5 is an example of a slot configuration corresponding to a first-type TDD carrier according to an embodiment of this application;
FIG. 6 is another example of a slot configuration corresponding to a first-type TDD carrier according to an embodiment of this application;
FIG. 7 is still another example of a slot configuration corresponding to a first-type TDD carrier according to an embodiment of this application;
FIG. 8 is an example of a slot configuration corresponding to a second-type TDD carrier according to an embodiment of this application;
FIG. 9 is another example of a slot configuration corresponding to a second-type TDD carrier according to an embodiment of this application;
FIG. 10 is still another example of a slot configuration corresponding to a second-type TDD carrier according to an embodiment of this application;
FIG. 11 is an example of a slot configuration corresponding to uplink and downlink TDD carriers according to an embodiment of this application;
FIG. 12 is another example of a slot configuration corresponding to uplink and downlink TDD carriers according to an embodiment of this application;
FIG. 13 is still another example of a slot configuration corresponding to uplink and downlink TDD carriers according to an embodiment of this application;
FIG. 14 is yet another example of a slot configuration corresponding to uplink and downlink TDD carriers according to an embodiment of this application;
FIG. 15 is a schematic diagram of a communication apparatus according to an embodiment of this application;
FIG. 16 is a schematic diagram of another communication apparatus according to an embodiment of this application;
FIG. 17 is a schematic diagram of a terminal device according to an embodiment of this application; and
FIG. 18 is a schematic diagram of a network device according to an embodiment of this application.

### DESCRIPTION OF EMBODIMENTS

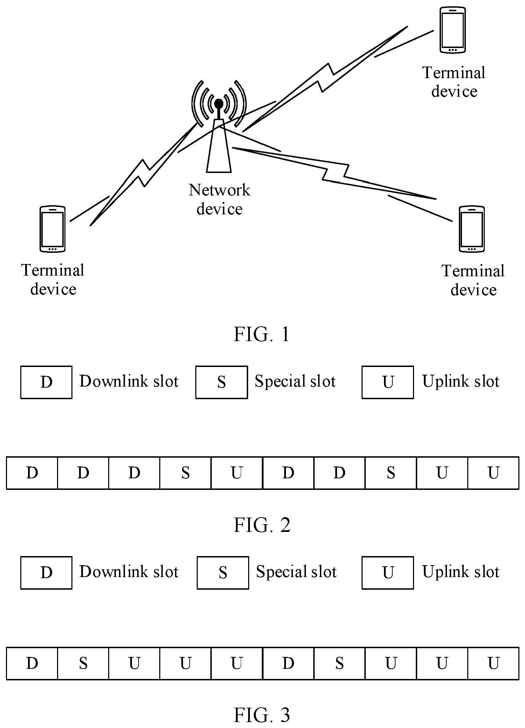

FIG. 1 is a schematic diagram of a network architecture to which an embodiment this application is applicable. The network architecture includes a terminal device and a network device. The terminal device communicates with the network device through a wireless interface.

The terminal device (terminal device) is a device having a wireless transceiver function. The terminal device may be deployed on land, including an indoor device, an outdoor device, a handheld device, or a vehicle-mounted device; or may be deployed on water (for example, on a ship); or may be deployed in the air (for example, on a plane, a balloon, or a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), user equipment (user equipment, UE), or the like.

The network device is a device that provides a wireless communication function for the terminal device. The network device includes but is not limited to a next generation NodeB (gNodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseBand unit, BBU), a transmission point (transmitting and receiving point, TRP), a transmission point (transmitting point, TP), a mobile switching center, or the like.

When 5G is independently deployed, a logical system of the network device can use a CU-DU split mode. Based on configuration of protocol stack functions, a CU-DU logical system may be classified into two types: a CU-DU split architecture and a CU-DU integrated architecture. For the CU-DU split architecture, the protocol stack functions may be dynamically configured and split. Some functions are implemented in a CU, and remaining functions are implemented in a DU. To meet requirements of different split options, ideal and non-ideal transmission networks need to be supported. An interface between the CU and the DU should comply with a 3rd generation partnership project (3rd generation partnership project, 3GPP) specification requirement. For the CU-DU integrated architecture, logical functions of a CU and a DU are integrated into a same network device, to implement all functions of a protocol stack.

In a TDD technology, an uplink and a downlink may operate on a same frequency, but the uplink and the downlink use different time domain resources. In other words, the uplink and the downlink in TDD may be distinguished based on different time domain resources. However, in a frequency division duplex (Frequency Division Duplexing, FDD) technology, an uplink and a downlink operate on different frequencies, but the uplink and the downlink may use a same time domain resource. In other words, the uplink and the downlink in FDD may be distinguished based on different frequencies.

In a conventional technology, in a slot configuration mechanism of a TDD carrier, uplink slots, downlink slots, and special slots are all configured based on a specific proportion. The uplink slots include only uplink symbols used for uplink transmission, the downlink slots include only downlink symbols used for downlink transmission, and the special slots include both uplink symbols used for uplink transmission and downlink symbols used for downlink transmission. Proportions of uplink symbols to downlink symbols in the special slots vary. Some special slots include more uplink symbols and some special slots include more downlink symbols.

FIG. 2 is an example of a slot configuration corresponding to a TDD carrier in a conventional technology. The slot configuration includes mainly downlink slots and has five downlink slots, three uplink slots, and two special slots. Because some uplink slots do not appear continuously and appear at a long interval, when uplink data arrives, the uplink data may need to wait for a long time before being sent. For example, if uplink data arrives at a start moment of the first "D" in FIG. 2, the uplink data can be sent only after a time interval of four slots, that is, the uplink data can be sent at a start moment of the first "U" in FIG. 2. If waiting time exceeds a minimum latency requirement, for example, 1 ms, a service latency requirement may not be met.

FIG. 3 is another example of a slot configuration corresponding to a TDD carrier in a conventional technology. The slot configuration includes mainly uplink slots and has two downlink slots, six uplink slots, and two special slots. Because some downlink slots do not appear continuously and appear at a long interval, when downlink data arrives, the downlink data may need to wait for a long time before being sent. For example, if downlink data arrives at a start moment of the first "U" in FIG. 3, the downlink data can be sent only after a time interval of four slots, that is, the downlink data can be sent at a start moment of the second "D" in FIG. 3. If waiting time exceeds a minimum latency requirement, for example, 1 ms, a service latency requirement may not be met.

In conclusion, the slot configuration of the TDD carrier in the conventional technology may cause that an uplink latency or a downlink latency fails to meet a service latency requirement, and further affect applications of 5G and subsequent communication in vertical industries.

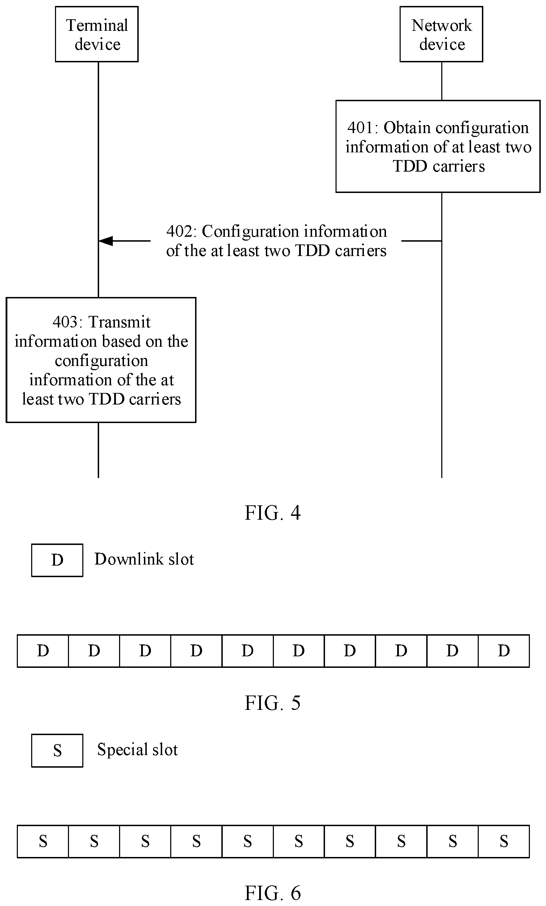

To resolve the foregoing problem, based on the network architecture shown in FIG. 1, as shown in FIG. 4, an embodiment of this application provides a carrier configuration method. According to the method, a TDD carrier combination manner is used to resolve a latency problem caused by a slot configuration limitation on a TDD carrier.

On a terminal device side, the method may be performed by a terminal device or a component (for example, a chip or a circuit) used in the terminal device. On a network side, the method may be performed by a network device or a component (for example, a chip or a circuit) used in the network device. For ease of description, an example in which the method is performed by the terminal device and the network device is used below for description.

The method includes the following steps.

Step 401: The network device obtains configuration information of at least two TDD carriers.

The at least two TDD carriers include at least one first-type TDD carrier and at least one second-type TDD carrier.

Optionally, the configuration information indicates that in one slot configuration period, each slot corresponding to the first-type TDD carrier includes only downlink symbols or mainly downlink symbols, and indicates that in the slot configuration period, each slot corresponding to the second-type TDD carrier includes only uplink symbols or mainly uplink symbols. It may be understood that the configuration information indicates a symbol direction configuration of each slot corresponding to one or more first-type TDD carriers in one slot configuration period, where each slot corresponding to the first-type TDD carrier includes only downlink symbols or mainly downlink symbols, and indicates a symbol direction configuration of each slot corresponding to one or more second-type TDD carriers, where each slot corresponding to the second-type TDD carrier includes only uplink symbols or mainly uplink symbols.

In an implementation, the configuration information may be one piece of configuration information. It may be understood that the one piece of configuration information is used to indicate symbol direction configurations of slots corresponding to the at least two TDD carriers. That is, the one piece of configuration information indicates the symbol direction configuration of each slot corresponding to one or more first-type TDD carriers in one slot configuration period and also indicates the symbol direction configuration of each slot corresponding to one or more second-type TDD carriers in the slot configuration period.

In another implementation, the configuration information may be two pieces of configuration information, for example, may include first configuration information and second configuration information. The first configuration information indicates that in one slot configuration period, each slot corresponding to the first-type TDD carrier includes only downlink symbols or mainly downlink symbols, and the second configuration information indicates that in the slot configuration period, each slot corresponding to the second-type TDD carrier includes only uplink symbols or mainly uplink symbols. It may be understood that the two pieces of configuration information are used to indicate symbol direction configurations of slots corresponding to the at least two TDD carriers. The first configuration information corresponding to a first TDD type indicates the symbol direction configuration of each slot corresponding to one or more first-type TDD carriers in one slot configuration period, and the second configuration information corresponding to a second TDD type indicates the symbol direction configuration of each slot corresponding to one or more second-type TDD carriers in the slot configuration period.

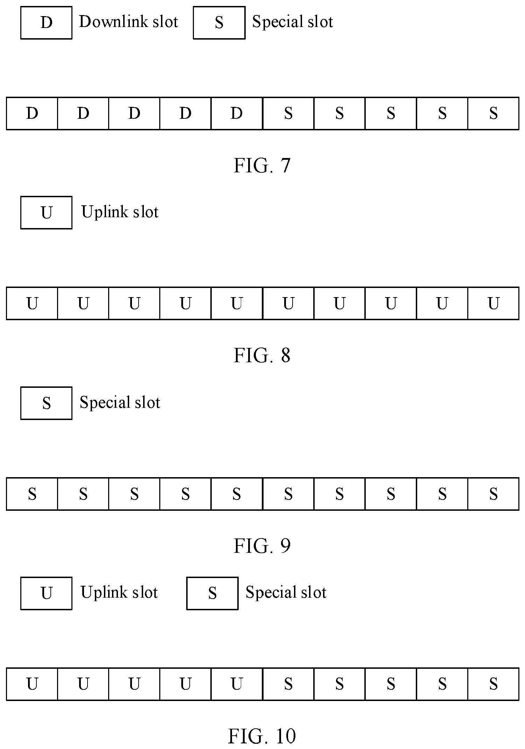

Each slot corresponding to the first-type TDD carrier includes only downlink symbols or mainly downlink symbols. Including mainly downlink symbols indicates that a proportion of downlink symbols in one slot exceeds a first threshold, where the first threshold is greater than or equal to 50%. FIG. 5 is an example of a slot configuration corresponding to the first-type TDD carrier according to this embodiment of this application. Each slot corresponding to the TDD carrier includes only downlink symbols. FIG. 6 is another example of a slot configuration corresponding to the first-type TDD carrier according to this embodiment of this application. Each slot corresponding to the TDD carrier includes mainly downlink symbols, that is, each slot includes both downlink symbols and uplink symbols, but a proportion of downlink symbols exceeds 50%. FIG. 7 is still another example of a slot configuration corresponding to the first-type TDD carrier according to this embodiment of this application. Each slot corresponding to the TDD carrier includes only downlink symbols or mainly downlink symbols. A quantity of slots including mainly downlink symbols and locations of the slots are not limited.

It should be noted that, for one slot configuration, if a plurality of slots include mainly downlink symbols, downlink symbol proportions in the slots may not be required to be the same but may be the same. FIG. 6 is used as an example. In the slot configuration, 10 slots include mainly downlink symbols. It is assumed that each slot includes 14 symbols. For example, there may be 10 downlink symbols in the first slot, eight downlink symbols in the second slot, and 10 downlink symbols in the third slot, provided that there are at least eight downlink symbols in each slot.

In an implementation, an uplink symbol in the slot that corresponds to the first-type TDD carrier and includes mainly downlink symbols is used to send an uplink sounding reference signal or an uplink control channel, and is not used to not send uplink data or an uplink access channel. In this way, a sending period of the uplink sounding reference signal or the uplink control channel can be reduced, in other words, sending frequency of the uplink sounding reference signal or the uplink control channel is increased, and this further improves downlink performance.

Each slot corresponding to the second-type TDD carrier includes only uplink symbols or mainly uplink symbols. Including mainly uplink symbols indicates that a proportion of uplink symbols in one slot exceeds a second threshold, where the second threshold is greater than or equal to 50%. FIG. 8 is an example of a slot configuration corresponding to the second-type TDD carrier according to this embodiment of this application. Each slot corresponding to the TDD carrier includes only uplink symbols. FIG. 9 is another example of a slot configuration corresponding to the second-type TDD carrier according to this embodiment of this application. Each slot corresponding to the TDD carrier includes mainly uplink symbols, that is, each slot includes both downlink symbols and uplink symbols, but a proportion of uplink symbols exceeds 50%. FIG. 10 is still another example of a slot configuration corresponding to the second-type TDD carrier according to this embodiment of this application. Each slot corresponding to the TDD carrier includes only uplink symbols or mainly uplink symbols. A quantity of slots including mainly uplink symbols and locations of the slots are not limited.

It should be noted that, for one slot configuration, if a plurality of slots include mainly uplink symbols, uplink symbol proportions in the slots may not be required to be the same but may be the same. FIG. 9 is used as an example. In the slot configuration, 10 slots include mainly uplink symbols. It is assumed that each slot includes 14 symbols. For example, there may be 10 uplink symbols in the first slot, nine uplink symbols in the second slot, and 10 uplink symbols in the third slot, provided that there are at least eight uplink symbols in each slot.

In an implementation, a downlink symbol in the slot that corresponds to the second-type TDD carrier and includes mainly uplink symbols is used to send a downlink reference signal or a downlink control channel, and is not used to send downlink data or a broadcast channel. In this way, resources for the downlink reference signal or the downlink control channel can be increased, and this further improves performance.

In an implementation, the configuration information is further used to indicate an access resource, and the access resource includes a time domain resource and/or a frequency domain resource. The time domain resource includes one or more symbols corresponding to the second-type TDD carrier in the slot configuration period. The access resource is used to indicate a time domain resource and/or a frequency domain resource that may be used when the terminal device accesses a network. It should be noted that, if the configuration information in step 401 includes the first configuration information and the second configuration information, the second configuration information is used to indicate the access resource.

The foregoing describes that the configuration information indicates that in one slot configuration period, each slot corresponding to the first-type TDD carrier includes only downlink symbols or mainly downlink symbols, and indicates that in the slot configuration period, each slot corresponding to the second-type TDD carrier includes only uplink symbols or mainly uplink symbols. It should be noted that, in this embodiment of this application, the configuration information may further indicate another combination form of time domain resources of the first-type carrier and the second-type carrier.

For example, the configuration information may indicate that in one slot configuration period, time domain resources of the first-type TDD carrier include only uplink time domain resources or mainly uplink time domain resources (for example, more than 50%), and in the slot configuration period, time domain resources of the second-type TDD carrier include only downlink time domain resources or mainly downlink time domain resources (for example, more than 50%).

In this example, optionally, when the time domain resources of the first-type TDD carrier include mainly uplink time domain resources, a downlink time domain resource of the first-type TDD carrier is used to send a downlink reference signal or a downlink control channel, and is not used to send downlink data or a broadcast channel. When the time domain resources of the second-type TDD carrier include mainly downlink time domain resources, an uplink time domain resource of the second-type TDD carrier is used to send an uplink sounding reference signal or an uplink control channel, and is not used to not send uplink data or an uplink access channel.

In this example, optionally, the configuration information may be specifically one piece of configuration information or two pieces of configuration information, for example, first configuration information and second configuration information. The first configuration information indicates that in one slot configuration period, each slot corresponding to the first-type TDD carrier includes only downlink symbols or mainly downlink symbols, and the second configuration information indicates that in the slot configuration period, each slot corresponding to the second-type TDD carrier includes only uplink symbols or mainly uplink symbols. Optionally, the first configuration information and the second configuration information may be carried in a same message or different messages. In the present invention, the first configuration information and the second configuration information are carried in different messages.

In this example, optionally, the downlink time domain resources include one or more downlink slots and/or downlink symbols. Optionally, the uplink time domain resources include one or more uplink slots and/or uplink symbols.

Step 402: The network device sends the configuration information of the at least two TDD carriers to the terminal device. Correspondingly, the terminal device receives the configuration information of the at least two TDD carriers.

In an implementation, when the configuration information of the at least two TDD carriers in step 401 includes the first configuration information and the second configuration information, the network device may send the first configuration information and the second configuration information to the terminal device in a same message or in different messages. In the present invention, the network device sends the first configuration information and the second configuration information in different messages.

When the network device sends the first configuration information and the second configuration information to the terminal device in different messages, the network device sends first a first message to the terminal device, where the first message carries the first configuration information, and the terminal device receives the first configuration information. Then, the network device sends a second message to the terminal device, where the second message is carried in the slot corresponding to the first-type TDD carrier, and the second message carries the second configuration information. In this manner, the configuration information of the second-type TDD carrier is sent in the slot corresponding to the first-type TDD carrier. Optionally, the second message is a system message or a radio resource control message.

Step 403: The terminal device transmits information based on the configuration information of the at least two TDD carriers.

The terminal device sends data, control information, signaling, and/or the like in a downlink direction based on the slot that corresponds to the first-type TDD carrier and that is indicated by the configuration information of the at least two TDD carriers.

The terminal device sends data, control information, signaling, and/or the like in an uplink direction based on the slot that corresponds to the second-type TDD carrier and that is indicated by the configuration information of the at least two TDD carriers.

The foregoing provides a configuration manner of slots corresponding to the TDD carriers in one slot configuration period, that is, the slot configuration period includes both the slot corresponding to the first-type TDD carrier and the slot corresponding to the second-type TDD carrier. Optionally, a configuration manner of the slots corresponding to the TDD carriers in another slot configuration period is the same as the configuration manner of the slots corresponding to the TDD carriers in the slot configuration period. In other words, configuration manners of the slots corresponding to the TDD carriers in all different slot configuration periods are repeated. Alternatively, it may be understood that a symbol direction of each slot corresponding to the first-type TDD carrier in another slot configuration period is repeated based on a symbol direction of each slot corresponding to the first-type TDD carrier in the slot configuration period; and a symbol direction of each slot corresponding to the second-type TDD carrier in another slot configuration period is repeated based on a symbol direction of each slot corresponding to the second-type TDD carrier in the slot configuration period. For example, each slot configuration period includes two slots, a symbol direction of the first slot in the slot configuration period is a downlink direction, and a symbol direction of the second slot in the slot configuration period is an uplink direction. For another example, each slot configuration period includes two slots. In the first slot in the slot configuration period, the first four symbols are all uplink symbols, and the last 10 symbols are all downlink symbols. In the second slot in the slot configuration period, the first 12 symbols are all uplink symbols, and the last two symbols are both downlink symbols.

Based on the foregoing solution, in a manner of a combination of two or more TDD carriers, namely, a combination of the at least one first-type TDD carrier and the at least one second-type TDD carrier, when uplink data transmission is performed on the second-type TDD carrier, if there is a downlink data requirement, downlink data transmission may be performed by using a downlink slot and/or symbol of the first-type TDD carrier instead of waiting for a downlink symbol of the second-type TDD carrier, thereby reducing a latency of the downlink data transmission. For another example, when downlink data transmission is performed on the first-type TDD carrier, if there is an uplink data requirement, uplink data transmission may be performed by using an uplink slot and/or symbol of the second-type TDD carrier instead of waiting for an uplink symbol of the first-type TDD carrier, thereby reducing a latency of the uplink data transmission. Therefore, this TDD carrier combination manner can achieve an effect similar to that of an FDD carrier. In this way, resources for sending uplink and downlink data are fully guaranteed, a latency can be reduced, and uplink and downlink performance can be improved. In addition, compared with an FDD frequency band, the TDD carrier combination manner may have a wider bandwidth, and this improves uplink and downlink performance and ensures user experience.

The following provides descriptions with reference to several specific examples. It should be noted that, in the following examples, 2.6 G, 2.3 G, and 1.9 G are used as examples of frequency bands, or other TDD frequency bands may be used. 100 M and 50 M are used as examples of carrier bandwidths, or bandwidths of other sizes may be used.

### Example 1

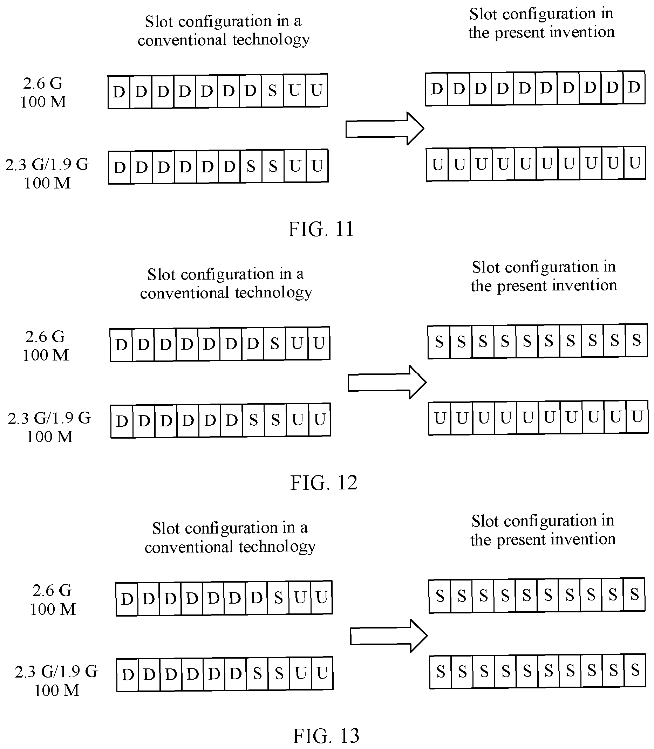

FIG. 11 is an example of a slot configuration corresponding to uplink and downlink TDD carriers according to an embodiment of this application. All slots of a slot configuration of a 2.6 G downlink TDD carrier include only downlink symbols, and all slots of a slot configuration of a 2.3 G uplink TDD carrier include only uplink symbols. The slot configuration of the 2.3 G uplink TDD carrier may be carried in a system message or a radio resource control message carried in a slot corresponding to the 2.6 G downlink TDD carrier.

Based on this example, if a 30k subcarrier spacing is used, a latency can be ensured, and a downlink throughput and an uplink throughput can be increased. In addition, because only one TDD carrier is used for downlink transmission, power consumption can be reduced. In addition, in a conventional technology, an uplink is limited when a frequency band is high. In this example, a low frequency band includes only uplink symbols to perform uplink compensation.

### Example 2

FIG. 12 is another example of a slot configuration corresponding to uplink and downlink TDD carriers according to an embodiment of this application. All slots of a slot configuration of a 2.6 G downlink TDD carrier include mainly downlink symbols, and all slots of a slot configuration of a 2.3 G uplink TDD carrier include only uplink symbols. The slot configuration of the 2.3 G uplink TDD carrier may be carried in a system message or a radio resource control message carried in a slot corresponding to the 2.6 G downlink TDD carrier.

Optionally, an uplink symbol in a slot including mainly downlink symbols is only used to send an uplink sounding reference signal or an uplink control channel, and is not used to send uplink data or an uplink access channel.

Based on this example, a beamforming problem of a 2.6 G sounding reference signal can be resolved. In addition, because sending periods of sounding reference signals becomes denser, a problem of mobility experience of more than 30 km/h can be resolved.

### Example 3

FIG. 13 is still another example of a slot configuration corresponding to uplink and downlink TDD carriers according to an embodiment of this application. All slots of a slot configuration of a 2.6 G downlink TDD carrier include mainly downlink symbols, and all slots of a slot configuration of a 2.3 G uplink TDD carrier include mainly uplink symbols. The slot configuration of the 2.3 G uplink TDD carrier may be carried in a system message or a radio resource control message carried in a slot corresponding to the 2.6 G downlink TDD carrier.

Optionally, an uplink symbol in a slot including mainly downlink symbols is only used to send an uplink sounding reference signal or an uplink control channel, and is not used to send uplink data or an uplink access channel. A downlink symbol in a slot including mainly uplink symbols is only used to send a downlink reference signal or a downlink control channel, and is not used to send downlink data or a broadcast channel.

Based on this example, compared with the foregoing example 2, an additional advantage of adding a downlink control channel can be obtained, to avoid a control channel bottleneck.

### Example 4

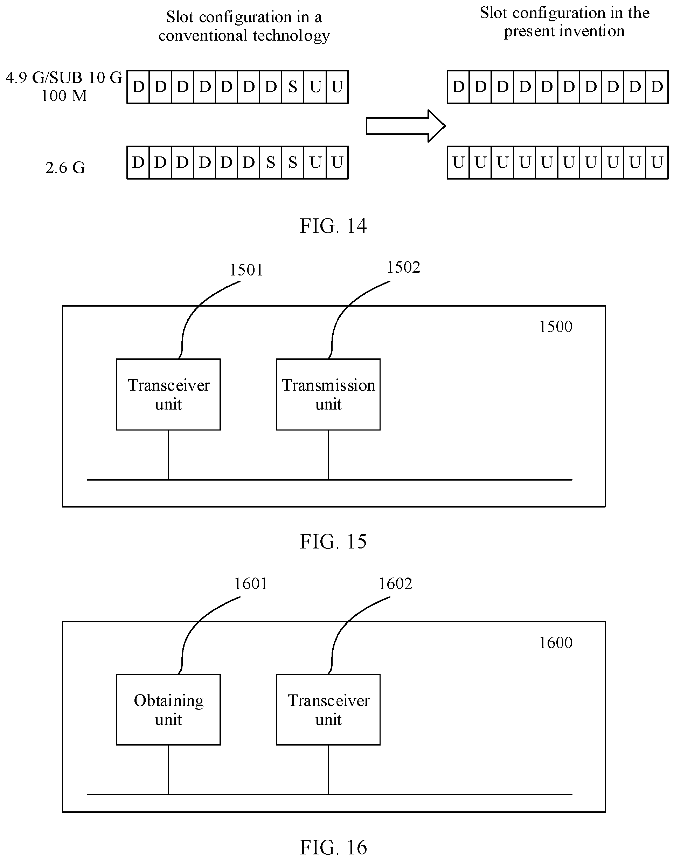

FIG. 14 is yet another example of a slot configuration corresponding to uplink and downlink TDD carriers according to an embodiment of this application. All slots of a slot configuration of a 4.9 G/SUB 10 G downlink TDD carrier include only downlink symbols, and all slots of a slot configuration of a 2.6 G uplink TDD carrier include only uplink symbols. The slot configuration of the 2.6 G uplink TDD carrier may be carried in a system message or a radio resource control message carried in a slot corresponding to the 4.9 G/SUB 10 G downlink TDD carrier.

Based on this example, advantages of a 4.9 G bandwidth and a 2.6 G frequency band can be fully used to resolve uplink and downlink coverage and data transmission rate problems. The downlink coverage can be resolved by using high power and a beamforming gain on a base station side, and the uplink coverage can be resolved by using a low frequency band. The 4.9 G/SUB 10 G carrier can fully increase a quantity of antenna elements, a quantity of channels, and power to resolve the downlink coverage and a capacity. The 2.6 G carrier can simplify an architecture, for example, use a receive only (RX ONLY) manner to resolve an uplink rate bottleneck.

The foregoing mainly describes the solutions provided in this application from a perspective of interaction between network elements. It may be understood that, to implement the foregoing functions, each network element includes a corresponding hardware structure and/or software module for implementing each function. A person skilled in the art should easily be aware that, in combination with the example units and algorithm steps described in embodiments disclosed in this specification, the present invention can be implemented by hardware or a combination of hardware and computer software. Whether a function is performed by hardware or hardware driven by computer software depends on particular applications and design constraints of the technical solutions. A person skilled in the art may use different methods to implement the described functions for each particular application.

It may be understood that in the foregoing method embodiments, corresponding steps or operations implemented by the terminal device may alternatively be implemented by a component (for example, a chip or a circuit) configured in the terminal device, and corresponding steps or operations implemented by the network device may alternatively be implemented by a component (for example, a chip or a circuit) configured in the network device.

Embodiments of this application further provide an apparatus configured to implement any one of the foregoing methods. For example, an apparatus is provided, including units (or means) configured to implement steps performed by the terminal device in any one of the foregoing methods. For another example, another apparatus is further provided, including units (or means) configured to implement steps performed by the network device in any one of the foregoing methods.

FIG. 15 is a schematic diagram of a communication apparatus according to an embodiment of this application. The apparatus is configured to implement steps performed by a corresponding terminal device in the foregoing method embodiments. As shown in FIG. 15, the apparatus 1500 includes a transceiver unit 1501 and a transmission unit 1502.

The transceiver unit 1501 is configured to receive configuration information of at least two TDD carriers from a network device, where the at least two TDD carriers include at least one first-type TDD carrier and at least one second-type TDD carrier, and the configuration information indicates that in one slot configuration period, each slot corresponding to the first-type TDD carrier includes only downlink symbols or mainly downlink symbols, and indicates that in the slot configuration period, each slot corresponding to the second-type TDD carrier includes only uplink symbols or mainly uplink symbols. The transmission unit 1502 is configured to transmit information based on the configuration information of the at least two TDD carriers.

In a possible implementation, the configuration information includes first configuration information corresponding to the at least one first-type TDD carrier and second configuration information corresponding to the at least one second-type TDD carrier; and the transceiver unit 1501 is specifically configured to: receive a first message from the network device, where the first message includes the first configuration information, and receive a second message from the network device, where the second message includes the second configuration information, and the second message is carried in a slot corresponding to the first-type TDD carrier.

In an implementation, the second message is a system message or a radio resource control message.

In an implementation, each slot corresponding to the first-type TDD carrier includes mainly the downlink symbols, and an uplink symbol in the slot including mainly the downlink symbols is used to send an uplink sounding reference signal or an uplink control channel.

In an implementation, each slot corresponding to the second-type TDD carrier includes mainly the uplink symbols, and a downlink symbol in the slot including mainly the uplink symbols is used to send a downlink reference signal or a downlink control channel.

In an implementation, the configuration information is further used to indicate an access resource, the access resource includes a time domain resource and/or a frequency domain resource, and the time domain resource includes one or more symbols corresponding to the second-type TDD carrier in the slot configuration period. It should be noted that, when the network device sends the two pieces of configuration information to the terminal device, the configuration information used to indicate the access resource herein is the second configuration information.

In an implementation, the including mainly the downlink symbols indicates that a proportion of downlink symbols in one slot exceeds a first threshold, where the first threshold is greater than or equal to 50%; and the including mainly the uplink symbols indicates that a proportion of uplink symbols in one slot exceeds a second threshold, where the second threshold is greater than or equal to 50%.

In an implementation, a symbol direction of each slot corresponding to the first-type TDD carrier in another slot configuration period is repeated based on a symbol direction of each slot corresponding to the first-type TDD carrier in the slot configuration period; and a symbol direction of each slot corresponding to the second-type TDD carrier in another slot configuration period is repeated based on a symbol direction of each slot corresponding to the second-type TDD carrier in the slot configuration period.

It may be understood that the foregoing units may also be referred to as modules, circuits, or the like, and the foregoing units may be independently disposed, or may be all or partially integrated. The transceiver unit 1501 may also be referred to as a communication interface.

Optionally, the communication apparatus 1500 may further include a storage unit. The storage unit is configured to store data or instructions (which may also be referred to as code or a program). The foregoing units may interact with or be coupled to the storage unit, to implement a corresponding method or function. For example, a processing unit may read the data or the instructions in the storage unit, so that the communication apparatus implements the methods in the foregoing embodiments.

FIG. 16 is a schematic diagram of a communication apparatus according to an embodiment of this application. The apparatus is configured to implement steps performed by a corresponding network device in the foregoing method embodiments. As shown in FIG. 16, the apparatus 1600 includes an obtaining unit 1601 and a transceiver unit 1602.

The obtaining unit 1601 is configured to: obtain configuration information of at least two TDD carriers, where the at least two TDD carriers include at least one first-type TDD carrier and at least one second-type TDD carrier, and the configuration information indicates that in one slot configuration period, each slot corresponding to the first-type TDD carrier includes only downlink symbols or mainly downlink symbols, and indicates that in the slot configuration period, each slot corresponding to the second-type TDD carrier includes only uplink symbols or mainly uplink symbols; and the transceiver unit 1602 is configured to send the configuration information of the at least two TDD carriers to a terminal device.

In a possible implementation, the configuration information includes first configuration information corresponding to the at least one first-type TDD carrier and second configuration information corresponding to the at least one second-type TDD carrier; and the transceiver unit is specifically configured to: send a first message to the terminal device, where the first message includes the first configuration information, and send a second message to the terminal device, where the second message includes the second configuration information, and the second message is carried in a slot corresponding to the first-type TDD carrier.

In an implementation, the second message is a system message or a radio resource control message.

In an implementation, each slot corresponding to the first-type TDD carrier includes mainly the downlink symbols, and an uplink symbol in the slot including mainly the downlink symbols is used to send an uplink sounding reference signal or an uplink control channel.

In an implementation, each slot corresponding to the second-type TDD carrier includes mainly the uplink symbols, and a downlink symbol in the slot including mainly the uplink symbols is used to send a downlink reference signal or a downlink control channel.

In an implementation, the configuration information is further used to indicate an access resource, the access resource includes a time domain resource and/or a frequency domain resource, and the time domain resource includes one or more symbols corresponding to the second-type TDD carrier in the slot configuration period. It should be noted that, when the network device sends the two pieces of configuration information to the terminal device, the configuration information used to indicate the access resource herein is the second configuration information.

In an implementation, the including mainly the downlink symbols indicates that a proportion of downlink symbols in one slot exceeds a first threshold, where the first threshold is greater than or equal to 50%; and the including mainly the uplink symbols indicates that a proportion of uplink symbols in one slot exceeds a second threshold, where the second threshold is greater than or equal to 50%.

In an implementation, a symbol direction of each slot corresponding to the first-type TDD carrier in another slot configuration period is repeated based on a symbol direction of each slot corresponding to the first-type TDD carrier in the slot configuration period; and a symbol direction of each slot corresponding to the second-type TDD carrier in another slot configuration period is repeated based on a symbol direction of each slot corresponding to the second-type TDD carrier in the slot configuration period.

It may be understood that the foregoing units may also be referred to as modules, circuits, or the like, and the foregoing units may be independently disposed, or may be all or partially integrated. The transceiver unit 1602 may also be referred to as a communication interface.

Optionally, the communication apparatus 1600 may further include a storage unit. The storage unit is configured to store data or instructions (which may also be referred to as code or a program). The foregoing units may interact with or be coupled to the storage unit, to implement a corresponding method or function. For example, a processing unit may read the data or the instructions in the storage unit, so that the communication apparatus implements the methods in the foregoing embodiments.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware, or some units may be implemented in a form of software invoked by a processing element, and some units may be implemented in a form of hardware. For example, the units may be separately disposed processing elements, or may be integrated into a chip of the apparatus for implementation. In addition, the units may be stored in a memory in a program form, and is invoked by a processing element of the apparatus to perform functions of the units. In addition, all or some of the units may be integrated together, or may be implemented independently. The processing element herein may also be referred to as a processor, and may be an integrated circuit having a signal processing capability. In an implementation process, the steps in the foregoing methods or the foregoing units may be implemented by using a hardware integrated logic circuit in the processing element, or may be implemented in a form of software invoked by the processing element.

For example, a unit in any one of the foregoing apparatuses may be one or more integrated circuits configured to implement the foregoing method, for example, one or more application specific integrated circuits (Application Specific Integrated Circuits, ASICs), one or more microprocessors (digital signal processors, DSPs), one or more field programmable gate arrays (Field Programmable Gate Arrays, FPGAs), or a combination of at least two of the integrated circuits. For another example, when the units in the apparatus may be implemented in a form of a program invoked by a processing element, the processing element may be a general-purpose processor, for example, a central processing unit (Central Processing Unit, CPU) or another processor that can invoke the program. For still another example, the units may be integrated and implemented in a form of a system-on-a-chip (system-on-a-chip, SOC).

The foregoing unit for receiving (for example, the receiving unit) is an interface circuit of the apparatus, and is configured to receive a signal from another apparatus. For example, when the apparatus is implemented by a chip, the receiving unit is an interface circuit that is of the chip and that is configured to receive a signal from another chip or apparatus. The foregoing unit for sending (for example, the sending unit) is an interface circuit of the apparatus, and is configured to send a signal to another apparatus. For example, when the apparatus is implemented by a chip, the sending unit is an interface circuit that is of the chip and that is configured to send a signal to another chip or apparatus.

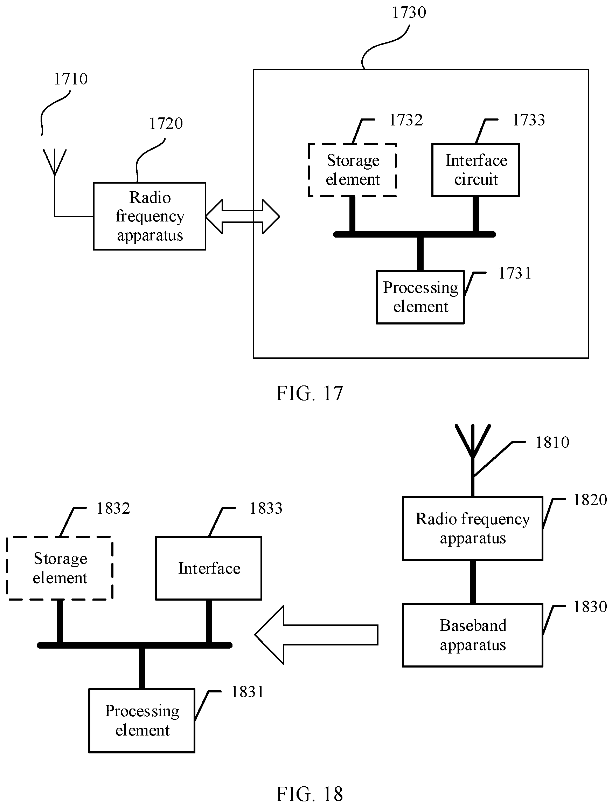

FIG. 17 is a schematic diagram of a structure of a terminal device according to an embodiment of this application. The terminal device is configured to implement operations of the terminal device in the foregoing embodiments. As shown in FIG. 17, the terminal device includes an antenna 1710, a radio frequency apparatus 1720, and a signal processing part 1730. The antenna 1710 is connected to the radio frequency apparatus 1720. In a downlink direction, the radio frequency apparatus 1720 receives, through the antenna 1710, information sent by a network device, and sends, to the signal processing part 1730 for processing, the information sent by the network device. In an uplink direction, the signal processing part 1730 processes information about the terminal device, and sends the processed information to the radio frequency apparatus 1720. The radio frequency apparatus 1720 processes the information about the terminal device, and then sends the processed information to the network device through the antenna 1710.

The signal processing part 1730 is configured to process each communication protocol layer of data. The signal processing part 1730 may be a subsystem of the terminal device. The terminal device may further include another subsystem, for example, a central processing subsystem, configured to implement processing on an operating system and an application layer of the terminal device. For another example, a peripheral subsystem is configured to implement a connection to another device. The signal processing part 1730 may be a separately disposed chip. Optionally, the foregoing apparatus may be located in the signal processing part 1730.

The signal processing part 1730 may include one or more processing elements 1731, for example, include a main control CPU and other integrated circuits, and include an interface circuit 1733. In addition, the signal processing part 1730 may further include a storage element 1732. The storage element 1732 is configured to store data and a program. The program used to perform the method performed by the terminal device in the foregoing methods may be or may not be stored in the storage element 1732, for example, stored in a memory outside the signal processing part 1730; when used, the signal processing part 1730 loads the program into a cache for use. The interface circuit 1733 is configured to communicate with the apparatus. The foregoing apparatus may be located in the signal processing part 1730. The signal processing part 1730 may be implemented by a chip. The chip includes at least one processing element and an interface circuit. The processing element is configured to perform steps of any method performed by the foregoing terminal device. The interface circuit is configured to communicate with another apparatus. In an implementation, units for implementing the steps in the foregoing methods may be implemented in a form of a program invoked by a processing element. For example, the apparatus includes a processing element and a storage element. The processing element invokes a program stored in the storage element, to perform the methods performed by the terminal device in the foregoing method embodiments. The storage element may be a storage element located on a same chip as the processing element, namely, an on-chip storage element.

In another implementation, a program used to perform the method performed by the terminal device in the foregoing methods may be in a storage element located on a different chip from the processing unit, namely, an off-chip storage element. In this case, the processing element invokes or loads the program from the off-chip storage element to the on-chip storage element, to invoke and perform the methods performed by the terminal device in the foregoing method embodiments.

In still another implementation, units in the terminal device for implementing the steps in the foregoing methods may be configured as one or more processing elements. These processing elements are disposed in the signal processing part 1730. The processing elements herein may be an integrated circuit, for example, one or more ASICs, one or more DSPs, one or more FPGAs, or a combination of these types of integrated circuits. These integrated circuits may be integrated together to form a chip.

The units for implementing the steps in the foregoing methods may be integrated together and implemented in a form of a system-on-a-chip (system-on-a-chip, SOC). The SOC chip is configured to implement the foregoing methods. At least one processing element and a storage element may be integrated into the chip, and the processing element invokes a program stored in the storage element to implement the foregoing methods performed by the terminal device. Alternatively, at least one integrated circuit may be integrated into the chip, to implement the foregoing methods performed by the terminal device. Alternatively, with reference to the foregoing implementations, functions of some units may be implemented by invoking a program by the processing element, and functions of some units may be implemented by the integrated circuit.

It can be learned that the foregoing apparatus may include at least one processing element and an interface circuit. The at least one processing element is configured to perform any one of the methods that are provided in the foregoing method embodiments and performed by the terminal device. The processing element may perform, in a first manner, to be specific, by invoking the program stored in the storage element, some or all steps performed by the terminal device, or may perform, in a second manner, to be specific, by using a hardware integrated logic circuit in the processing element in combination with instructions, some or all steps performed by the terminal device, or may certainly perform, by combining the first manner and the second manner, some or all steps performed by the terminal device.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits. The storage element may be one memory, or may be a general term of a plurality of storage elements.

FIG. 18 is a schematic diagram of a structure of a network device according to an embodiment of this application. The network device is configured to implement operations of the network device in the foregoing embodiments. As shown in FIG. 18, the network device includes an antenna 1810, a radio frequency apparatus 1820, and a baseband apparatus 1830. The antenna 1810 is connected to the radio frequency apparatus 1820. In an uplink direction, the radio frequency apparatus 1820 receives, through the antenna 1810, information sent by a terminal device, and sends, to the baseband apparatus 1830 for processing, the information sent by the terminal device. In a downlink direction, the baseband apparatus 1830 processes information about the terminal device, and sends the processed information to the radio frequency apparatus 1820. The radio frequency apparatus 1820 processes the information about the terminal device, and then sends the processed information to the terminal device through the antenna 1810.

The baseband apparatus 1830 may include one or more processing elements 1831, for example, include a main control CPU and another integrated circuit, and further include an interface 1833. In addition, the baseband apparatus 1830 may further include a storage element 1832. The storage element 1832 is configured to store a program and data. The interface 1833 is configured to exchange information with the radio frequency apparatus 1820. The interface is, for example, a common public radio interface (common public radio interface, CPRI). The foregoing apparatus used in the network device may be located in the baseband apparatus 1830. For example, the foregoing apparatus used in the network device may be a chip in the baseband apparatus 1830. The chip includes at least one processing element and an interface circuit. The processing element is configured to perform steps in any one of the methods performed by the network device. The interface circuit is configured to communicate with another apparatus. In an implementation, units in the network device for implementing the steps in the foregoing methods may be implemented in a form of a program invoked by a processing element. For example, the apparatus used in the network device includes a processing element and a storage element. The processing element invokes a program stored in the storage element, to perform the methods performed by the network device in the foregoing method embodiments. The storage element may be a storage element located on a same chip as the processing element, namely, an on-chip storage element, or may be a storage element located on a different chip from the processing element, namely, an off-chip storage element.

In another implementation, units in the network device for implementing the steps in the foregoing methods may be configured as one or more processing elements. These processing elements are disposed in the baseband apparatus. The processing element herein may be an integrated circuit, for example, one or more ASICs, one or more DSPs, one or more FPGAs, or a combination of these types of integrated circuits. These integrated circuits may be integrated together to form a chip.

The units in the network device for implementing the steps in the foregoing methods may be integrated together and implemented in a form of a system-on-a-chip (system-on-a-chip, SOC). For example, the baseband apparatus includes the SOC chip, and is configured to implement the foregoing methods. At least one processing element and a storage element may be integrated into the chip, and the processing element invokes a program stored in the storage element to implement the foregoing methods performed by the network device. Alternatively, at least one integrated circuit may be integrated into the chip, to implement the foregoing methods performed by the network device. Alternatively, with reference to the foregoing implementations, functions of some units may be implemented by invoking a program by the processing element, and functions of some units may be implemented by the integrated circuit.

It can be learned that the foregoing apparatus used in the network device may include at least one processing element and an interface circuit. The at least one processing element is configured to perform any one of the methods that are provided in the foregoing method embodiments and performed by the network device. The processing element may perform, in a first manner, to be specific, by invoking the program stored in the storage element, some or all steps performed by the network device; or may perform, in a second manner, to be specific, by using a hardware integrated logic circuit in the processing element in combination with instructions, some or all steps performed by the network device, or may certainly perform, by combining the first manner and the second manner, some or all steps performed by the network device.

As described above, the processing element herein may be a general-purpose processor, for example, a CPU, or may be one or more integrated circuits configured to implement the foregoing methods, for example, one or more ASICs, one or more microprocessors DSPs, one or more FPGAs, or a combination of at least two of the integrated circuits. The storage element may be one memory, or may be a general term of a plurality of storage elements.

All or part of the foregoing embodiments may be implemented by software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that first, second, and various reference numerals in this application are only used for differentiation for ease of description, do not represent a sequence, and are not used to limit the scope of embodiments of this application. The term "and/or" describes an association relationship between associated objects and represents that three relationships may exist. For example, A and/or B may represent the following three cases: Only A exists, both A and B exist, and only B exists. The character "/" generally indicates an "or" relationship between the associated objects. "At least one" means one or more. At least two means two or more. "At least one", "any one", or a similar expression means any combination of these items, including any combination of singular items (pieces) or plural items (pieces). For example, at least one (piece, or type) of a, b, or c may represent a, b, c, a and b, a and c, b and c, or a, b and c, where a, b, and c may be singular or plural. "A plurality of" means two or more than two, and another quantifier is similar to this.

The various illustrative logical units and circuits described in embodiments of this application may implement or operate the described functions by using a general-purpose processor, a digital signal processor, an application specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

In one or more example designs, the functions described in this application may be implemented by hardware, software, firmware, or any combination thereof. If the functions are implemented by software, these functions may be stored in a computer-readable medium or are transmitted to the computer-readable medium in a form of one or more instructions or code. The computer-readable medium includes a computer storage medium and a communication medium that enables a computer program to be transferred from one place to another. The storage medium may be any available medium that may be accessed by a general-purpose or special-purpose computer. For example, such a computer-readable medium may include but is not limited to a RAM, a ROM, an EEPROM, a CD-ROM, or another optical disc storage, a disk storage or another magnetic storage apparatus, or any other medium that may be used to carry or store program code, where the program code is in a form of instructions or a data structure or in a form that can be read by a general-purpose or special computer or a general-purpose or special-purpose processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disk (disk) and the disc (disc) include a compact disc, a laser disc, an optical disc, a digital versatile disc (English: Digital Versatile Disc, DVD for short), a floppy disk, and a Blu-ray disc. The disc usually copies data by a magnetic means, and the disk optically copies data by a laser means. The foregoing combination may also be included in the computer-readable medium.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a special-purpose computer.

## Claims

1. A carrier configuration method, comprising:
receiving (402), by a terminal device, configuration information of at least two time division duplex, TDD, carriers from a network device, wherein the at least two TDD carriers comprise at least one first-type TDD carrier and at least one second-type TDD carrier, and the configuration information indicates that in one slot configuration period, each slot corresponding to the first-type TDD carrier comprises only downlink symbols or mainly downlink symbols, and indicates that in the slot configuration period, each slot corresponding to the second-type TDD carrier comprises only uplink symbols or mainly uplink symbols; and
transmitting (403), by the terminal device, information based on the configuration information of the at least two TDD carriers,
wherein the configuration information comprises first configuration information corresponding to the at least one first-type TDD carrier and second configuration information corresponding to the at least one second-type TDD carrier; the method being **characterized in that**:
the receiving (402), by a terminal device, configuration information of at least two TDD carriers from a network device comprises:
receiving, by the terminal device, a first message from the network device, wherein the first message comprises the first configuration information; and
receiving, by the terminal device, a second message from the network device, wherein the second message comprises the second configuration information, and the second message is carried in a slot corresponding to the first-type TDD carrier.

2. The method according to any one of claim 1, wherein the configuration information is further used to indicate an access resource, the access resource comprises a time domain resource and/or a frequency domain resource, and the time domain resource comprises one or more symbols corresponding to the second-type TDD carrier in the slot configuration period.

3. The method according to any one of claims 1 or 2, wherein the comprising mainly the downlink symbols indicates that a proportion of downlink symbols in one slot exceeds a first threshold, wherein the first threshold is greater than or equal to 50%; and
the comprising mainly the uplink symbols indicates that a proportion of uplink symbols in one slot exceeds a second threshold, wherein the second threshold is greater than or equal to 50%.

4. A carrier configuration method, comprising:
obtaining (401), by a network device, configuration information of at least two time division duplex, TDD, carriers, wherein the at least two TDD carriers comprise at least one first-type TDD carrier and at least one second-type TDD carrier, and the configuration information indicates that in one slot configuration period, each slot corresponding to the first-type TDD carrier comprises only downlink symbols or mainly downlink symbols, and indicates that in the slot configuration period, each slot corresponding to the second-type TDD carrier comprises only uplink symbols or mainly uplink symbols; and
sending (402), by the network device, the configuration information of the at least two TDD carriers to a terminal device,
wherein the configuration information comprises first configuration information corresponding to the at least one first-type TDD carrier and second configuration information corresponding to the at least one second-type TDD carrier; the method being **characterized in that**:
the sending (402), by the network device, the configuration information of the at least two TDD carriers to a terminal device comprises:
sending, by the network device, a first message to the terminal device, wherein the first message comprises the first configuration information; and
sending, by the network device, a second message to the terminal device, wherein the second message comprises the second configuration information, and the second message is carried in a slot corresponding to the first-type TDD carrier.

5. The method according to any one of claim 1, and 4, wherein each slot corresponding to the first-type TDD carrier comprises mainly the downlink symbols, and an uplink symbol in the slot comprising mainly the downlink symbols is used to send an uplink sounding reference signal or an uplink control channel.

6. The method according to any one of claims 1 to 2, and 4 to 5, wherein in each slot corresponding to the second-type TDD carrier comprises mainly the uplink symbols, and a downlink symbol in the slot comprising mainly the uplink symbols is used to send a downlink reference signal or a downlink control channel.

7. The method according to any one of claims 4 to 6, wherein the configuration information is further used to indicate an access resource, the access resource comprises a time domain resource and/or a frequency domain resource, and the time domain resource comprises one or more symbols corresponding to the second-type TDD carrier in the slot configuration period.

8. The method according to any one of claims 4 to 7, wherein the comprising mainly the downlink symbols indicates that a proportion of downlink symbols in one slot exceeds a first threshold, wherein the first threshold is greater than or equal to 50%; and
the comprising mainly the uplink symbols indicates that a proportion of uplink symbols in one slot exceeds a second threshold, wherein the second threshold is greater than or equal to 50%.

9. The method according to any one of claims 1 to 3, and 4 to 8, wherein a symbol direction of each slot corresponding to the first-type TDD carrier in another slot configuration period is repeated based on a symbol direction of each slot corresponding to the first-type TDD carrier in the slot configuration period; and
a symbol direction of each slot corresponding to the second-type TDD carrier in another slot configuration period is repeated based on a symbol direction of each slot corresponding to the second-type TDD carrier in the slot configuration period.

10. A communication apparatus, configured to perform the method according to any one of claims 1 to 3.

11. A communication apparatus, configured to perform the method according to any one of claims 4 to 8.

12. A computer-readable storage medium, wherein the computer-readable storage medium stores a program; and when the program is invoked by a processor, the method according to any one of claims 1 to 8 is performed.

13. A computer program product, comprising a computer program, wherein when the computer program is executed by a communication apparatus, the method according to any one of claims 1 to 8 is implemented.

## Patentansprüche

1. Trägerkonfigurationsverfahren, umfassend:
Empfangen (402), durch eine Endgeräteeinrichtung, von Konfigurationsinformationen von mindestens zwei Zeitduplex-Trägern, TDD-Trägern, von einer Netzeinrichtung, wobei die mindestens zwei TDD-Träger mindestens einen TDD-Träger des ersten Typs und mindestens einen TDD-Träger des zweiten Typs umfassen und die Konfigurationsinformationen angeben, dass in einem Zeitschlitz-Konfigurationszeitraum jeder Zeitschlitz, der dem TDD-Träger des ersten Typs entspricht, nur Downlink-Symbole oder hauptsächlich Downlink-Symbole umfasst, und angeben, dass in dem Zeitschlitz-Konfigurationszeitraum jeder Zeitschlitz, der dem TDD-Träger des zweiten Typs entspricht, nur Uplink-Symbole oder hauptsächlich Uplink-Symbole umfasst; und
Übertragen (403), durch die Endgeräteeinrichtung, von Informationen basierend auf den Konfigurationsinformationen der mindestens zwei TDD-Träger,
wobei die Konfigurationsinformationen erste Konfigurationsinformationen, die dem mindestens einen TDD-Träger des ersten Typs entsprechen, und zweite Konfigurationsinformationen, die dem mindestens einen TDD-Träger des zweiten Typs entsprechen, umfassen; wobei das Verfahren **dadurch gekennzeichnet ist, dass**:
das Empfangen (402), durch eine Endgeräteeinrichtung, von Konfigurationsinformationen von mindestens zwei TDD-Trägern von einer Netzeinrichtung Folgendes umfasst:
Empfangen, durch die Endgeräteeinrichtung, einer ersten Nachricht von der Netzeinrichtung, wobei die erste Nachricht die ersten Konfigurationsinformationen umfasst; und
Empfangen, durch die Endgeräteeinrichtung, einer zweiten Nachricht von der Netzeinrichtung, wobei die zweite Nachricht die zweiten Konfigurationsinformationen umfasst und die zweite Nachricht in einem Zeitschlitz getragen wird, der dem TDD-Träger des ersten Typs entspricht.

2. Verfahren nach Anspruch 1, wobei die Konfigurationsinformationen ferner dazu verwendet werden, eine Zugriffsressource anzugeben, wobei die Zugriffsressource eine Zeitbereichsressource und/oder eine Frequenzbereichsressource umfasst und die Zeitbereichsressource ein oder mehrere Symbole umfasst, die dem TDD-Träger des zweiten Typs in dem Zeitschlitz-Konfigurationszeitraum entsprechen.

3. Verfahren nach einem der Ansprüche 1 oder 2, wobei das hauptsächliche Umfassen der Downlink-Symbole angibt, dass ein Anteil der Downlink-Symbole in einem Zeitschlitz einen ersten Schwellenwert überschreitet, wobei der erste Schwellenwert größer als oder gleich 50 % ist; und
das hauptsächliche Umfassen der Uplink-Symbole angibt, dass ein Anteil der Uplink-Symbole in einem Zeitschlitz einen zweiten Schwellenwert überschreitet, wobei der zweite Schwellenwert größer als oder gleich 50 % ist.

4. Trägerkonfigurationsverfahren, umfassend:
Erlangen (401), durch eine Netzeinrichtung, von Konfigurationsinformationen von mindestens zwei Zeitduplex-Trägern, TDD-Trägern, wobei die mindestens zwei TDD-Träger mindestens einen TDD-Träger des ersten Typs und mindestens einen TDD-Träger des zweiten Typs umfassen und die Konfigurationsinformationen angeben, dass in einem Zeitschlitz-Konfigurationszeitraum jeder Zeitschlitz, der dem TDD-Träger des ersten Typs entspricht, nur Downlink-Symbole oder hauptsächlich Downlink-Symbole umfasst, und angeben, dass in dem Zeitschlitz-Konfigurationszeitraum jeder Zeitschlitz, der dem TDD-Träger des zweiten Typs entspricht, nur Uplink-Symbole oder hauptsächlich Uplink-Symbole umfasst; und
Senden (402), durch die Netzeinrichtung, der Konfigurationsinformationen der mindestens zwei TDD-Träger an eine Endgeräteeinrichtung,
wobei die Konfigurationsinformationen erste Konfigurationsinformationen, die dem mindestens einen TDD-Träger des ersten Typs entsprechen, und zweite Konfigurationsinformationen, die dem mindestens einen TDD-Träger des zweiten Typs entsprechen, umfassen; wobei das Verfahren **dadurch gekennzeichnet ist, dass**:
das Senden (402), durch die Netzeinrichtung, der Konfigurationsinformationen der mindestens zwei TDD-Träger an eine Endgeräteeinrichtung Folgendes umfasst:
Senden, durch die Netzeinrichtung, einer ersten Nachricht an die Endgeräteeinrichtung, wobei die erste Nachricht die ersten Konfigurationsinformationen umfasst; und
Senden, durch die Netzeinrichtung, einer zweiten Nachricht an die Endgeräteeinrichtung, wobei die zweite Nachricht die zweiten Konfigurationsinformationen umfasst und die zweite Nachricht in einem Zeitschlitz getragen wird, der dem TDD-Träger des ersten Typs entspricht.

5. Verfahren nach einem der Ansprüche 1 und 4, wobei jeder Zeitschlitz, der dem TDD-Träger des ersten Typs entspricht, hauptsächlich die Downlink-Symbole umfasst und ein Uplink-Symbol in dem Zeitschlitz, der hauptsächlich die Downlink-Symbole umfasst, dazu verwendet wird, ein Uplink-Sondierungsreferenzsignal oder einen Uplink-Steuerkanal zu senden.

6. Verfahren nach einem der Ansprüche 1 bis 2 und 4 bis 5, wobei jeder Zeitschlitz, der dem TDD-Träger des zweiten Typs entspricht, hauptsächlich die Uplink-Symbole umfasst und ein Downlink-Symbol in dem Zeitschlitz, der hauptsächlich die Uplink-Symbole umfasst, dazu verwendet wird, ein Downlink-Referenzsignal oder einen Downlink-Steuerkanal zu senden.

7. Verfahren nach einem der Ansprüche 4 bis 6, wobei die Konfigurationsinformationen ferner dazu verwendet werden, eine Zugriffsressource anzugeben, wobei die Zugriffsressource eine Zeitbereichsressource und/oder eine Frequenzbereichsressource umfasst und die Zeitbereichsressource ein oder mehrere Symbole umfasst, die dem TDD-Träger des zweiten Typs in dem Zeitschlitz-Konfigurationszeitraum entsprechen.

8. Verfahren nach einem der Ansprüche 4 bis 7, wobei das hauptsächliche Umfassen der Downlink-Symbole angibt, dass ein Anteil der Downlink-Symbole in einem Zeitschlitz einen ersten Schwellenwert überschreitet, wobei der erste Schwellenwert größer als oder gleich 50 % ist; und
das hauptsächliche Umfassen der Uplink-Symbole angibt, dass ein Anteil der Uplink-Symbole in einem Zeitschlitz einen zweiten Schwellenwert überschreitet, wobei der zweite Schwellenwert größer als oder gleich 50 % ist.

9. Verfahren nach einem der Ansprüche 1 bis 3 und 4 bis 8, wobei eine Symbolrichtung jedes Zeitschlitzes, der dem TDD-Träger des ersten Typs in einem anderen Zeitschlitz-Konfigurationszeitraum entspricht, basierend auf einer Symbolrichtung jedes Zeitschlitzes, der dem TDD-Träger des ersten Typs in dem Zeitschlitz-Konfigurationszeitraum entspricht, wiederholt wird; und
eine Symbolrichtung jedes Zeitschlitzes, der dem TDD-Träger des zweiten Typs in einem anderen Zeitschlitz-Konfigurationszeitraum entspricht, basierend auf einer Symbolrichtung jedes Zeitschlitzes, der dem TDD-Träger des zweiten Typs in dem Zeitschlitz-Konfigurationszeitraum entspricht, wiederholt wird.

10. Kommunikationsvorrichtung, die dazu konfiguriert ist, das Verfahren nach einem der Ansprüche 1 bis 3 durchzuführen.

11. Kommunikationsvorrichtung, die dazu konfiguriert ist, das Verfahren nach einem der Ansprüche 4 bis 8 durchzuführen.

12. Computerlesbares Speichermedium, wobei das computerlesbare Speichermedium ein Programm speichert; und, wenn das Programm durch einen Prozessor aufgerufen wird, das Verfahren nach einem der Ansprüche 1 bis 8 durchgeführt wird.

13. Computerprogrammprodukt, umfassend ein Computerprogramm, wobei, wenn das Computerprogramm durch eine Kommunikationsvorrichtung ausgeführt wird, das Verfahren nach einem der Ansprüche 1 bis 8 umgesetzt wird.

## Revendications

1. Procédé de configuration de porteuses, comprenant :
la réception (402), par un dispositif terminal, d'informations de configuration d'au moins deux porteuses duplex à répartition dans le temps, TDD, provenant d'un dispositif réseau, dans lequel les au moins deux porteuses TDD comprennent au moins une porteuse TDD de premier type et au moins une porteuse TDD de second type, et les informations de configuration indiquent que, dans une période de configuration de créneau, chaque créneau correspondant à la porteuse TDD de premier type comprend uniquement des symboles de liaison descendante ou principalement des symboles de liaison descendante, et indiquent que, dans la période de configuration de créneau, chaque créneau correspondant à la porteuse TDD de second type comprend uniquement des symboles de liaison montante ou principalement des symboles de liaison montante ; et
la transmission (403), par le dispositif terminal, d'informations sur la base des informations de configuration des au moins deux porteuses TDD,
dans lequel les informations de configuration comprennent des premières informations de configuration correspondant à l'au moins une porteuse TDD de premier type et des secondes informations de configuration correspondant à l'au moins une porteuse TDD de second type ; le procédé étant **caractérisé en ce que** :
la réception (402), par un dispositif terminal, d'informations de configuration d'au moins deux porteuses TDD provenant d'un dispositif réseau ;
la réception, par le dispositif terminal, d'un premier message provenant du dispositif réseau, dans lequel le premier message comprend les premières informations de configuration ; et
la réception, par le dispositif terminal, d'un second message provenant du dispositif réseau, dans lequel le second message comprend les secondes informations de configuration, et le second message est transporté dans un créneau correspondant à la porteuse TDD de premier type.

2. Procédé selon l'une quelconque de la revendication 1, dans lequel les informations de configuration sont également utilisées pour indiquer une ressource d'accès, la ressource d'accès comprend une ressource de domaine temporel et/ou une ressource de domaine fréquentiel, et la ressource de domaine temporel comprend un ou plusieurs symboles correspondant à la porteuse TDD de second type dans la période de configuration de créneau.

3. Procédé selon l'une quelconque des revendications 1 ou 2, dans lequel le fait de comprendre principalement les symboles de liaison descendante indique qu'une proportion de symboles de liaison descendante dans un intervalle dépasse un premier seuil, dans lequel le premier seuil est supérieur ou égal à 50 % ; et
le fait de comprendre principalement les symboles de liaison montante indique qu'une proportion de symboles de liaison montante dans un créneau dépasse un second seuil, dans lequel le second seuil est supérieur ou égal à 50 %.

4. Procédé de configuration de porteuses, comprenant :
l'obtention (401), par un dispositif réseau, d'informations de configuration d'au moins deux porteuses duplex à répartition dans le temps, TDD, dans lequel les au moins deux porteuses TDD comprennent au moins une porteuse TDD de premier type et au moins une porteuse TDD de second type, et les informations de configuration indiquent que, dans une période de configuration de créneau, chaque créneau correspondant à la porteuse TDD de premier type comprend uniquement des symboles de liaison descendante ou principalement des symboles de liaison descendante, et indiquent que, dans la période de configuration de créneau, chaque créneau correspondant à la porteuse TDD de second type comprend uniquement des symboles de liaison montante ou principalement des symboles de liaison montante ; et
l'envoi (402), par le dispositif réseau, des informations de configuration des au moins deux porteuses TDD à un dispositif terminal,
dans lequel les informations de configuration comprennent des premières informations de configuration correspondant à l'au moins une porteuse TDD de premier type et des secondes informations de configuration correspondant à l'au moins une porteuse TDD de second type ; le procédé étant **caractérisé en ce que** :
l'envoi (402), par le dispositif réseau, des informations de configuration des au moins deux porteuses TDD à un dispositif terminal comprend :
l'envoi, par le dispositif réseau, d'un premier message au dispositif terminal, dans lequel le premier message comprend les premières informations de configuration ; et
l'envoi, par le dispositif réseau, d'un second message au dispositif terminal, dans lequel le second message comprend les secondes informations de configuration, et le second message est transporté dans un créneau correspondant à la porteuse TDD de premier type.

5. Procédé selon l'une quelconque des revendications 1 et 4, dans lequel chaque créneau correspondant à la porteuse TDD de premier type comprend principalement les symboles de liaison descendante, et un symbole de liaison montante dans le créneau comprenant principalement les symboles de liaison descendante est utilisé pour envoyer un signal de référence de sondage de liaison montante ou un canal de commande de liaison montante.

6. Procédé selon l'une quelconque des revendications 1 et 2, et 4 et 5, dans lequel chaque créneau correspondant à la porteuse TDD de second type comprend principalement les symboles de liaison montante, et un symbole de liaison descendante dans le créneau comprenant principalement les symboles de liaison montante est utilisé pour envoyer un signal de référence de liaison descendante ou un canal de commande de liaison descendante.

7. Procédé selon l'une quelconque des revendications 4 à 6, dans lequel les informations de configuration sont également utilisées pour indiquer une ressource d'accès, la ressource d'accès comprend une ressource de domaine temporel et/ou une ressource de domaine fréquentiel, et la ressource de domaine temporel comprend un ou plusieurs symboles correspondant à la porteuse TDD de second type dans la période de configuration de créneau.

8. Procédé selon l'une quelconque des revendications 4 ou 7, dans lequel le fait de comprendre principalement des symboles de liaison descendante indique qu'une proportion de symboles de liaison descendante dans un intervalle dépasse un premier seuil, dans lequel le premier seuil est supérieur ou égal à 50 % ; et
le fait de comprendre principalement les symboles de liaison montante indique qu'une proportion de symboles de liaison montante dans un créneau dépasse un second seuil, dans lequel le second seuil est supérieur ou égal à 50 %.

9. Procédé selon l'une quelconque des revendications 1 à 3, et 4 à 8, dans lequel une direction de symbole de chaque créneau correspondant à la porteuse TDD de premier type dans une autre période de configuration de créneau est répétée sur la base de la direction de symbole de chaque créneau correspondant à la porteuse TDD de premier type dans la période de configuration de créneau ; et
une direction de symbole de chaque créneau correspondant à la porteuse TDD de second type dans une autre période de configuration de créneau est répétée sur la base d'une direction de symbole de chaque créneau correspondant à la porteuse TDD de second type dans la période de configuration de créneau.

10. Appareil de communication, configuré pour réaliser le procédé selon l'une quelconque des revendications 1 à 3.

11. Appareil de communication, configuré pour réaliser le procédé selon l'une quelconque des revendications 4 à 8.

12. Support de stockage lisible par ordinateur, dans lequel le support de stockage lisible par ordinateur stocke un programme ; et lorsque le programme est invoqué par un processeur, le procédé selon l'une quelconque des revendications 1 à 8 est réalisé.

13. Produit de programme informatique, comprenant un programme informatique, dans lequel lorsque le programme informatique est exécuté par un appareil de communication, le procédé selon l'une quelconque des revendications 1 à 8 est mis en œuvre.
